Europäisches Patentamt

European Patent Office

Office européen des brevets

(19)

(11) Veröffentlichungsnummer: **0 279 889**
**B1**

(12) **EUROPÄISCHE PATENTSCHRIFT**

(45) Veröffentlichungstag der Patentschrift:
**10.10.90**

(51) Int. Cl.⁵: **F16H 57/02, B60K 17/34**

(21) Anmeldenummer: **87105930.9**

(22) Anmeldetag: **23.04.87**

(54) Lagerung eines Zwischenrades eines Allrad-Verteilergetriebes.

(30) Priorität: **21.02.87 DE 3705606**

(43) Veröffentlichungstag der Anmeldung:
**31.08.88 Patentblatt 88/35**

(45) Bekanntmachung des Hinweises auf die Patenterteilung:
**10.10.90 Patentblatt 90/41**

(84) Benannte Vertragsstaaten:
**DE ES FR GB IT NL SE**

(56) Entgegenhaltungen:
**FR-A- 1 562 308**
**US-A- 1 702 752**
**US-A- 2 253 148**
**US-A- 4 223 570**
**US-A- 4 231 622**
**US-A- 4 531 421**

(73) Patentinhaber: **Dr.Ing.h.c. F. Porsche
Aktiengesellschaft, Porschestrasse 42,
D-7000 Stuttgart 40(DE)**

(72) Erfinder: **Müller, Robert, Badstrasse 21,
D-7251 Monsheim(DE)**
Erfinder: **Maier, Ulrich, Burgunderstrasse 1,
D-7149 Freiberg/Neckar(DE)**
Erfinder: **Hoebel, Peter, Waldenserstrasse 15,
D-7135 Wiernsheim-Serres(DE)**

## Beschreibung

Die Erfindung betrifft die Lagerung eines Zwischenrades im Allrad- Verteilergetriebe eines Kraftfahrzeugs nach dem Oberbegriff des Anspruchs 1.

Bei einem Allrad- Verteilergetriebe, wie es aus DE-A 3 604 143 bekannt ist, muß der Achsabstand der vom Allrad- Sperrsystem ausgehenden Antriebswelle zu der die eine Fahrzeugachse treibenden Abtriebswelle verhältnismäßig groß sein, um diese Abtriebswelle an dem großvolumigen Gehäuse des Gangwechselgetriebes seitlich vorbeiführen zu können. Würde man auf der Antriebswelle und Abtriebswelle miteinander kämmende große Zahnräder verwenden, so würden die beiden Fahrzeugachsen in unterschiedlichen Umlaufrichtungen angetrieben. Man benutzt deshalb ein Verteilergetriebe aus einem Zahnrad der Antriebswelle, einem Zwischenrad und einem Zahnrad auf der Abtriebswelle.

Aus FR-A 1 562 308 ist eine Lagerung eines Zwischenrades bekannt, bei der ein Schraubbolzen an der einen Gehäusewand zentriert und an der zweiten Gehäusewand mit einer Mutter befestigt ist. Das zentrierte Ende des Bolzens besitzt einen konischen Absatz und verspannt damit das Zwischenrad gegen die zweite Gehäusewand.

Es ist die Aufgabe der Erfindung, eine Lagerung für das Zwischenrad zu schaffen, die kostengünstig herstellbar ist und auf einfache Weise eine spielfreie Lagereinstellung sowie den Rundlauf des Zwischenrades gewährleistet.

Zur Lösung dieser Aufgabe dienen die kennzeichnenden Merkmale des Anspruchs 1. Wenn das Zwischenrad auf einer Lagerbuchse gelagert ist, die mit einer Schraubverbindung die beiden Gehäusewände des Getriebegehäuses axial zueinander verspannt, läßt sich beim Anziehen der Schraubverbindung das Axialspiel des zwischen den beiden Gehäusewänden eingespannten Lagers zu Null machen.

In vorteilhafter Ausgestaltung der Erfindung wird als Schraubverbindung eine zentrisch durch die Lagerbuchse durchgehende Schraube verwendet, die mit ihrem Kopf im Bereich der einen Gehäusewand an der Lagerbuchse anliegt und die mit einer Mutter von außen gegen die andere Gehäuseseite verspannt wird. Hiebei wird die in eine glatt durchgehende Bohrung des Getriebegehäuses eingepaßte Lagerbuchse mit einem Anschlagbund gegen die eine Gehäuseseite angelegt. Das aus Leichtmetall gefertigte Getriebegehäuse, dessen Gehäusewände biegeelastisch ausgeführt sind, wird bei angezogener Schraubverbindung durch die Lagerbuchse versteift und gibt somit weniger Anlaß zu geräuschverursachender Schallabstrahlung.

Wenn das Zwischenrad auf Kegelrollenlagern gelagert ist, kann mit dem Anziehen der Schraubverbindung zugleich ein exakter Rundlauf sichergestellt werden. Am besten gelingt das, indem die Nabe des Zwischenrades als gemeinsamer Außenring der Kegelrollenlager ausgebildet ist und unmittelbar die Lauffläche der Kegelrollenlager darstellt. Über die zwischen den beiden Gehäusewänden eingespannten Innenringe der Kegelrollenlager und den zwischen ihnen liegenden, in seiner Länge exakt tolerierten Distanzring, lassen sich beim Anziehen der Schraubverbindung die Kegelrollen an das Zwischenrad anlegen, so daß das Radialspiel des Lagers zu Null wird.

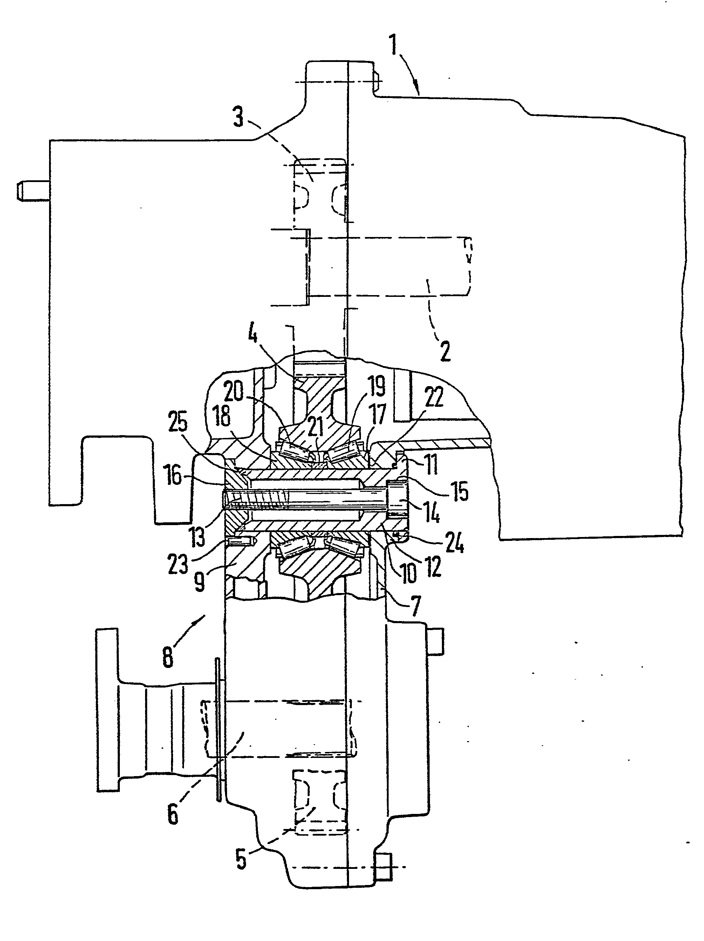

Ein Ausführungsbeispiel der Erfindung ist in der Zeichnung dargestellt und wird nachfolgend erläutert.

Auf einer von einem Allrad- Differentialgetriebe 1 ausgehenden Antriebswelle 2 ist ein Antriebszahnrad 3 drehfest, das mit einem Zwischenrad 4 und einem auf einer Abtriebswelle 6 drehfesten Abtriebszahnrad 5 ein Verteilergetriebe zum Antrieb einer Fahrzeugachse bildet, das von einem Getriebegehäuse 8 umschlossen ist. Die eine Gehäusewand 7 des Getriebegehäuses 8 ist an die einstückig mit dem Gesamtgetriebegehäuse aus Leichtmetall gegossene andere Gehäusewand 9 angeflanscht.

In eine glatt durchgehende Bohrung durch die beiden Gehäusewände 7 und 9 ist eine Lagerbuchse 10 eingepaßt und liegt mit einem Anschlagbund 11 an einem äußeren Auge 12 der einen Gehäusewand 7 an. Zentral durch die Lagerbuchse 10 geht eine Innensechskant-Schraube 13, deren Kopf 14 in einer Ausdrehung 15 der Lagerbuchse 10 liegt. Durch eine an der anderen Gehäusewand 9 außen anliegende Mutter 16 sind die beiden Gehäusewände 7, 9 zueinander verspannt und verspannen damit zugleich die zwischen ihnen liegenden Innenringe 17 und 18 von Kegelrollenlagern 19 und 20 sowie einen Distanzring 21. Mittels einer zwischen dem Innenring 17 und der einen Gehäusewand 7 liegenden Einstellscheibe 22 werden grobe Toleranzungenauigkeiten durch Wahl einer bestimmten Scheibenstärke ausgeglichen. Da die eine Gehäusewand 7 biegeelastisch ausgeführt ist, kann durch Anziehen der Schraubverbindung 13, 16 diese Gehäusewand 7 soweit verformt werden, daß das Axialspiel zu Null wird und die Innenringe 17, 18 der Kegelrollenlager 19, 20 zwischen den Gehäusewänden 7, 9 verspannt sind. Dabei werden zugleich die Rollen der Kegelrollenlager 19, 20 an die konischen Laufflächen des Zwischenrades 4 angelegt und das Radialspiel wird beseitigt.

Die Mutter 16 ist durch einen in der Gehäusewand 9 befestigten Stift 23 gegen Verdrehen gesichert; sie braucht daher beim Anziehen der Schraube 13 nicht festgehalten zu werden. Zur Schmierung der Kegelrollenlager 19, 20 reicht das von den Zahnrädern 3, 4, 5 in das Getriebegehäuse 8 abgeschleuderte Spritzöl aus. Um einen Ölaustritt nach außen an der Lagerbuchse 10 zu verhindern, ist zwischen den Anschlagbund 11 der Lagerbuchse 10 und das Auge 12 der einen Gehäusewand 7 ein O-Ring 24 ein weiterer O-Ring 25 zwischen die Stirnfläche der Lagerbuchse 10 und die Mutter 16 eingelegt.

## Patentansprüche

1. Lagerung eines Zwischenrades eines Allrad-Verteilergetriebes, wobei das zwischen zwei Gehäusewänden (7, 9) eines Getriebegehäuses gelagerte Zwischenrad (4) mit einem vom Allrad-Sperrsystem ausgehenden Antriebszahnrad (3)

und einem die eine Fahrzeugachse antreibenden Abtriebszahnrad (5) kämmt, dadurch gekennzeichnet, daß das Zwischenrad (4) auf einer Lagerbuchse (10) gelagert ist, die an ihrer einen Seite mit einem Anschlagbund (11) an der Außenseite der einen biegeelastisch ausgeführten Gehäusewand (7) anliegt und an ihrer anderen Seite außen gegen die andere Gehäusewand (9) durch eine Schraubverbindung (13, 16) axial vespannt ist.

2. Lagerung nach Anspruch 1, dadurch gekennzeichnet, daß die Schraubverbindung (13, 16) aus einer zentrisch durch die Lagerbuchse (10) durchgehenden Schraube (13) und einer Mutter (16) besteht, wobei der Kopf (14) der Schraube (13) einen Anschlagbund (11) der Lagerbuchse (10) an die eine Gehäusewand (7) anlegt und die Mutter (16) an der anderen Gehäusewand (9) anliegt.

3. Lagerung nach Anspruch 1 und 2, dadurch gekennzeichnet, daß die Lagerbuchse (10) in eine durch beide Gehäusewände (7, 9) glatt durchgehende Bohrung eingepaßt ist und gegenüber beiden Gehäusewänden (9) abgedichtet ist.

4. Lagerung nach einem der Ansprüche 1 bis 3, dadurch gekennzeichnet, daß das Zwischenrad (4) auf der Lagerbuchse (10) mittels zweier Kegelrollenlager (19, 20) gelagert ist.

5. Lagerung nach Anspruch 4, dadurch gekennzeichnet, daß die Nabe (4') des Zwischenrades (4) als gemeinsamer Außenring für beide Kegelrollenlager (19, 20) ausgebildet ist.

6. Lagerung nach Anspruch 4 und 5, dadurch gekennzeichnet, daß die Innenringe (17, 18) der Kegelrollenlager (19, 20) unter Zwischenschaltung eines Distanzringes (21) durch die Schraubverbindung (13, 16) von innen gegen die beiden Gehäusewände (7, 9) verspannt sind.

7. Lagerung nach einem der Ansprüche 1 bis 6, dadurch gekennzeichnet, daß durch die biegeelastische Ausbildung der einen Gehäusewand (7) und durch Verspannen der Schraubverbindung (13, 16) eine spielfreie Lagereinstellung ermöglicht wird.

8. Lagerung nach Anspruch 6 und 7 , dadurch gekennzeichnet, daß zwischen den Innenring (17) des einen Kegelrollenlagers (19) und die eine Gehäusewand (7) eine Einstellscheibe (22) eingelegt ist.

9. Lagerung nach Anspruch 3, dadurch gekennzeichnet, daß die Mutter (16) durch einen Stift (23) gegen Verdrehen gesichert ist.

## Revendications

1. Montage à paliers d'une roue intermédiaire d'une boite de transfert, la roue intermédiaire (14) montées entre deux parois de carter (7, 9) d'un carter de transmission, s'engrenant avec une roue d'engrenage d'entrainement (3) sortant du systéme de blocage du transfert et avec une roue d'engrenage entrainée (5) entrainant un essieu du véhicule, caractérisé en ce que la roue intermédiaire (4) est montée sur une douille de palier (10) qui appuie sur une de ses faces avec une collerette de butée (11) sur la face extérieure d'une paroi de carter (7) élastiquement déformable et qui est serrée axialement sur son autre face, contre l'autre paroi de carter (9), par une liaison à vis (13, 16).

2. Montage à paliers selon la revendication 1, caractérisé en ce que la liaison à vis (13, 16) se compose d'une vis (13) traversant centralement la douille de palier (10) et d'un écrou (16), la tête (14) de la vis (13) faisant appuyer une collerette de butée (11) de la douille de palier (10) sur une paroi de carter (7) et l'écrou (16) appuyant sur l'autre paroi de carter (9).

3. Montage à paliers selon les revendications 1 et 2, caractérisé en ce que la douille de palier (10) est ajustée dans un alésage lisse traversant les deux parois de carter (7, 9) et est isolée de manière étanche vis à vis des deux parois de carter (7, 9).

4. Montage à paliers selon l'une des revendications 1 à 3, caractérisé en ce que la roue intermédiaire (4) est montée sur la douille de palier (10) au moyen de deux roulements à rouleaux coniques (19, 20).

5. Montage à paliers selon la revendication 4, caractérisé en ce que le moyeu (4') de la roue intermédiaire est réalisé sous forme de bague extérieure commune pour les deux roulements à rouleaux coniques (19, 20).

6. Montage à paliers selon les revendications 4 et 5, caractérisé en ce que les bagues intérieures (17, 18) des paliers à rouleaux coniques (19, 20) sont serrées par la liaison à vis (13, 16), depuis l'intérieur, contre les deux parois de carter (7, 9), avec interposition d'une bague entretoise (21).

7. Montage à paliers selon l'une des revendications 1 à 6, caractérisé en ce qu'un réglage de palier exempt de tout jeu est rendu possible du fait de la réalisation élastiquement déformable de l'une des parois de carter (7), par serrage de la liaison à vis (13, 16).

8. Montage à paliers selon les revendications 6 et 7, caractérisé en ce qu'une rondelle de réglage (22) est insérée entre la bague intérieure (17) d'un des paliers à rouleaux coniques (19) et l'une des parois de carter (7).

9. Montage à paliers selon la revendication 1, caractérisé en ce que l'écrou (16) est bloqué en rotation au moyen d'une goupille (23).

## Claims

1. A mounting of an intermediate gearwheel of an all-wheel distributor gear, the intermediate gearwheel (4) mounted between two walls (7, 9) of a gearbox casing meshing with a driving gearwheel (3) which starts from the all-wheel locking system and with a driven gearwheel (5) which drives one axle of the vehicle, characterized in that the intermediate gearwheel (4) is mounted on a bearing bush (10) resting at one end with a bearing collar (11) on the outside of one casing wall (7) made flexibly resilient and axially clamped by a screw connexion (13, 16) at its other end against the outside of the other casing wall (9).

2. A mounting according to Claim 1, characterized in that the screw connexion (13, 16) comprises a screw (13), passing centrally through the bearing bush (10), and a nut (16), the head (14) of the screw (13) pressing a stop collar (11) of the bearing bush (10) against one casing wall (7), and the nut (16) resting aginst the other casing wall (9).

3. A mounting according to Claims 1 and 2, characterized in that the bearing bush (10) is fitted into a bore passing smoothly through the two casing walls (7, 9) and is sealed against the two casing walls (7, 9).

4. A mounting according to any one of Claims 1 to 3, characterized in that the intermediate gearwheel (4) is mounted on the bearing bush (10) by means of two tapered roller bearings (19, 20).

5. A mounting according to Claim 4, characterized in that the hub (4') of the intermediate gearwheel (4) is constructed as a common outer race for the two tapered roller bearings (19, 20).

6. A mounting according to Claims 4 and 5, characterized in that the inner races (17, 18) of the tapered roller bearings (19, 20) are clamped from the inside by the screw connexion (13, 16) against the two casing walls (7, 9) with the interposition of a spacer ring (21).

7. A mounting according to any one of Claims 1 to 6, characterized in that a clearance-free bearing setting is made possible by the flexibly resilient construction of one casing wall (7) and by the clamping action of the screw connexion (13, 16).

8. A mounting according to Claims 6 and 7, characterized in that a setting screw (22) is inserted between the inner race (17) of one tapered roller bearing (19) and one casing wall (7).

9. A mounting according to Claim 3, characterized in that the nut (16) rs prevented from turning by a pin (23).